# EUROPEAN PATENT APPLICATION

(11) **EP 2 682 372 A1**
(43) Date of publication of application: **08.01.2014**
(21) Application number: 12175145.7
(22) Date of filing: 05.07.2012
(51) Int. Cl.: C02F 11/12, B63J 4/00, B01D 17/02, B01D 3/10, C02F 1/04, C02F 101/32, C02F 103/00

(54) **System and method for dewatering oil/water sludge**

(71) Applicant: Faroe Maritime Technic, 900 Vagur (FO)
(72) Inventor: Joensen, Kaj, 900 Vágur (FO)
(74) Representative: Pálsson, Ingólfur

(57) **Abstract**

A dewatering system (1) and method for separating oil/water sludge, such as oil/water sludge generated on a maritime vessel, into a clean water component and a dewatered waste oil component in a repetitive batch process is disclosed. The system (1) comprises a vacuum distillation device (2), the vacuum distillation device having a feed port (8) for loading a batch of an oil/water mixture to be treated, a processing chamber (10) provided with heating means (12, 13) in a bottom portion thereof, means for controlling the heating means, a vapour phase port (14) communicating with a top portion of the processing chamber (10), a vacuum pump (15) connected to the vapour phase port (14) and configured for removing water vapour from the processing chamber (10) so as to reduce the vapour phase pressure therein to below atmospheric pressure, and a waste port (17) configured for retrieving dewatered waste oil from a bottom portion of the processing chamber. The system (1) further comprises a control unit (4) configured to perform one or more control functions for controlling the operation of the system (1) in a programmed manner. A gravitational settling device (3, 203) is provided for pretreating the sludge to remove continuous phase water prior to loading the distillation device (2).

## Description

The invention relates to the technical field of dewatering oil/water sludge on board of a marine vessel.

According to one aspect, the invention relates to a system for separating oil/water sludge, such as oil/water sludge generated on a maritime vessel, into a clean water component and a dewatered waste oil component in a repetitive batch process, the system comprising a vacuum distillation device, the vacuum distillation device having a feed port for loading a batch of an oil/water mixture to be treated, a processing chamber provided with heating means in a bottom portion thereof, means for controlling the heating means, a vapour phase port communicating with a top portion of the processing chamber, a vacuum pump connected to the vapour phase port and configured for removing water vapour from the processing chamber so as to reduce the vapour phase pressure therein to below atmospheric pressure, and a waste port configured for retrieving dewatered waste oil from a bottom portion of the processing chamber, the system further comprising a control unit configured to perform one or more control functions for controlling the operation of the system in a programmed manner.

According to a further aspect, the invention relates to a method for separating an oil/water sludge, such as oil/water sludge generated on a maritime vessel, into a clean water component and a dewatered waste oil component in a repetitive batch process, the method comprising the steps of
- loading a batch of an oil/water mixture as a liquid phase in a processing chamber of a vacuum distillation device,
- reducing the pressure in the processing chamber to a processing pressure below atmospheric pressure,
- heating the liquid phase to a liquid phase processing temperature so as to release water from the oil/water mixture of the liquid phase into a vapour phase above the liquid phase and removing vapour from the vapour phase in the processing chamber until the water content of the liquid phase has reached a pre-determined target value, and subsequently
- transferring a residual liquid from the processing chamber to a waste oil tank.

The term oil/water sludge as used in the present invention refers to a mixture comprising hydrocarbon oil and water, such as generated in a machinery of a marine vessel. In marine applications, sources of oil/water sludge are, for example, oil skimmed from the bilge water of a ship, lubricants and greases, and effluent from bunker and cargo tank cleaning. A large amount of sludge is routinely produced onboard by the purification of fuel oil prior to its use in a combustion engine of the marine vessel. Yet a further source of oil/water sludge is the purification of lubricant oil. Such onboard purifiers commonly comprise centrifuging steps, where water is added during the processing, which then is discharged to a sludge tank of the marine vessel.

The oil/water sludge is collected in a sludge tank on the marine vessel, from which it usually is disposed overboard at suitable disposal facilities, for example in a harbour or to dedicated waste barches transporting the sludge to adequate waste disposal facilities. Such disposal is typically charged by the amount of the waste, and is a considerable cost factor in the operation of a marine vessel. Therefore a reduction of the water content of the sludge to a minimum is desirable in order to reduce discharge cost.

Furthermore, the capacity available for keeping such waste on-board is limited and the requirement to empty that tank can be very inconvenient in a given situation. Therefore, in order to reduce discharge cost and to extend the operation range of a marine vessel, other methods of processing and handling sludge have been developed. Some ships are for example equipped with incinerators in which contaminated oil reclaimed from sludge may be burned. However, the oily sludge generated on a marine vessel may be a highly complex mixture of hydrocarbons from different sources, water, and solid particles. Such a mixture is not directly suited for being burned in an incinerator. In particular, the water content must be reduced to below a critical content acceptable to typical incinerators. Therefore, a processing of the sludge on board is required in order to extract the components that can be burned in an incinerator.

Processing of such sludges for the reclamation of the different components, and in particular of the oily components, in dedicated plants on land is a challenge in itself. Processing the sludge on-board of the marine vessel faces the additional challenge that it requires a simple and efficient method that can be implemented in a reliable and compact system, which may be installed for operation on-board. Such a system has also to be operational under the harsh conditions at sea, and amongst other has to be robust in respect of the constant movements of the marine vessel under the influence of the waves.

Some known methods or systems for treating sludge on-board of a ship in order to reduce the water content thereof include adding demulsifying chemicals. Such methods are problematic in that they involve a risk of pollution of the environment, or require skillful preparation and handling of the chemicals in question, in order to achieve the desired dehydration. Other processes involve a complex set-up with a large foot-print and/or a high energy consumption, and are often unreliable in practice.

Therefore, there is a need for an improved or at least alternative method of treating oil/water sludge from a sludge tank on board of a marine vessel, in order to reduce the water content of the sludge in an environmentally safe and sustainable manner.

According to one aspect, the object of the invention is achieved by a system for dewatering sludge according to claim 1. According to a further aspect, the object is achieved by a system for dewatering sludge according to claim 14. Advantageous embodiments are defined by the respective dependent claims.

According to one embodiment of the invention, a system for separating oil/water sludge, such as oil/water sludge generated on a maritime vessel, into a clean water component and a dewatered waste oil component in a repetitive batch process is provided, the system comprising
- a vacuum distillation device, the vacuum distillation device having a feed port for loading a batch of an oil/water mixture to be treated, a processing chamber provided with heating means in a bottom portion thereof, means for controlling the heating means, a vapour phase port communicating with a top portion of the processing chamber, a vacuum pump connected to the vapour phase port and configured for removing water vapour from the processing chamber so as to reduce the vapour phase pressure therein to below atmospheric pressure, and a waste port configured for retrieving dewatered waste oil from a bottom portion of the processing chamber,
the system further comprising
- a control unit configured to perform one or more control functions for controlling the operation of the system in a programmed manner, and
- a gravitational settling device for pre-treating the sludge prior to loading the distillation device, wherein the gravitational settling device has a sludge inlet for receiving sludge in a settling chamber, a water outlet for releasing water, and an oil outlet for releasing pre-concentrated oil, wherein the gravitational device is connected to the system via means for transferring water from the water outlet of the gravitational settling device to a clean watertank and means for transferring pre-concentrated oil from the oil outlet of the gravitational settling device to the feed port of the distillation device, and wherein means are provided for transferring sludge from a sludge tank to the sludge inlet of the gravitational settling device.

In the vacuum distillation device, the oil/water mixture is processed in the processing chamber. During the processing, the oil/water mixture is kept under vacuum, i.e. at a process pressure below atmospheric pressure, which preferably is below 0.4 bar, more preferably below 0.3 bar, more preferably below 0.2 bar, or most preferred about 0.1 bar. Under vacuum, the oil/water mixture is heated to and kept at a process temperature where the water contained in the oil/water mixture is brought to a boiling or at least exhibits substantial evaporation under the particular process pressure. For example, at a process pressure of about 0.1 bar, an advantageous process temperature of the oil/water mixture is between 60-70 degrees C, preferably between 65-70 degrees C, or about 67 degrees C.

The water vapour generated by the boiling accumulates in a top portion of the processing chamber from where it is removed by means of a vacuum pump, thereby gradually dewatering the oil/water mixture until the water content is below a pre-determined level, or until no more water can be removed by the process. In one embodiment, the water vapour removed from the process chamber may be blown off. The vapour removed at low pressures from the processing chamber has a temperature below dew-point at atmospheric pressure, which upon release to atmospheric pressure leads to a natural condensation of the water vapour. However preferably, means are provided for condensing and collecting the water vapour retrieved from the vapour port of the distillation device. The vacuum pump has to be compatibel with the high water vapour load of the evacuated volume generated during the boiling process. Advantageously according to one embodiment, the vacuum pump may be of the liquid ring type.

Alternatively or in addition thereto, an efficient direct condensation of the vapour released through the vapour port may also act as a pump for reducing the vapour pressure in the processing chamber during the distillation process. The condensed water is collected by means for transferring the condensed water to the clean water tank. The condensed water may also be collected by first transferring it back to the sludge tank from where it is transferred to the sludge inlet of the gravitational settling device before the water via the water outlet eventually reaches the clean water tank. Thereby it is achieved that any water transferred to the clean water tank has a well defined level of cleanliness as determined by the gravitational settling device. Furthermore, in case the sludge in the sludge tank is very viscous, the condensed water may be added to the sludge to facilitate retrieving the sludge from the sludge tank.

After boiling and removal of the water vapour, dewatered oil remains in the bottom portion of the processing chamber from where it is removed via the waste port of the distillation device. The dewatered oil is the collected as concentrated waste oil by means for transferring the dewatered oil from the waste port of the distillation device to a waste oil tank. Once the dewatered oil is removed, the processing chamber may be loaded with a new batch of oil/water mixture and the distillation process for dewatering the oil may be repeated.

Advantageously the operation of the system is at least partially automated by means of a control unit configured to perform one or more control functions. Advantageously, the control functions comprise e.g. the control of the loading of the distillation device, of the effect/temperature of the heating means, of the vapour phase pressure, of the retrieval and condensation of water vapour via the vapour phase port, and/or of the discharging of waste oil via the waste port. Further advantageously, the control unit may perform one or more of the control functions of the system individually and/or in combination with any of the other control functions. Further advantageously, the control functions may include a manual overwrite of any automated/programmed functions. Further advantageously, the control functions may include functions/programs implementing procedures for safety, reset, and/or recovery upon detection of an exceptional operational state, such as a system failure, a component failure, an excess process pressure or temperature reading, or a power outage.

The sludge in the sludge tank of a marine vessel is usually a complex mixture of hydrocarbons and water. The total water content of the sludge may vary within wide ranges, such as between 20% and 90% by volume. An important insight used in developping the solution of the present invention is that the sludge in the sludge tank of a marine vessel is often a highly inhomogeneous mixture of hydrocarbon oils and water comprising both a dispersed phase of water and a substantial amount of a continuous phase of water, wherein typically already in the sludge tank the continous phase of water accumulates in a bottom portion of the sludge tank. When retrieving sludge from the sludge tank for a dewatering treatment, the liquid received at the dewatering system may therefore vary in composition from essentially water in the continuous phase to a mixture of hydrocarbon oils comprising water essentially only in a dispersed phase. This insight is exploited in the present invention for reducing the footprint and energy consumption of the vacuum distillation device and thus of the total dewatering system.

According to the present invention, the distillation device is filled via a gravitational settling device, wherein liquid is transferred from the sludge tank through the sludge inlet to the settling chamber of the gravitational settling device. Hydrocarbon oils that are lighter than water rise to the top of the settling chamber, whereas a continuous phase of water accumulates almost instantaneously at the bottom of the settling chamber. The continuous phase of water may thus be removed quickly and efficiently from the bottom region of the settling chamber and collected in a clean water tank. Above the continuous phase of water, the settling chamber also comprises water dispersed as droplets within the hydrocarbon oils. Recovering water from the dispersed phase in a settling process involves coalescence of the water droplets, which occurs on a longer time scale and may require additional measures to be taken, such as adding emulsion breaking chemicals or passing the fluid through a coalescing medium. While some coalescence may occur at this stage also in the gravitational settling device, the gravitational settling device of the present invention is configured and operated for removal of the continous phase water already present in the sludge by decanting. Preferably, the gravitational settling device is configured for continuous flow operation, wherein sludge is fed to the sludge inlet, a continuous phase of clean water is removed from the bottom portion of the settling chamber, and pre-concentrated oil is retrieved from a top portion of the gravitational device. The pre-concentrated oil is an oil/water mixture, which may entrain minor amounts of continuous phase water, but mainly comprises water dispersed in the hydrocarbon oils. The gravitational settling device thus performs a rough pre-separation, removing the easily removable continuous phase water components of the sludge prior to loading the pre-concentrated oil/water mixture to the distillation apparatus, where a further dewatering distillation process takes place. The distillation process is in principle capable of removing both dispersed water and continuous phase water from the oil, but is very energy consuming. By performing the pre-separation, energy can be saved and the distillation apparatus for a given task may be dimensioned smaller both in terms of the power consumption of the components and in terms of the footprint of the system. Such a task may for example be the processing of sludge from the sludge tank of the marine vessel at a given production rate of e.g. 1 m3 sludge treated per day to produce dewatered waste oil with a residual water content below 5% by volume. Since the sludge in a sludge tank on a marine vessel often contains considerable amounts of water in a continuous phase, the pre-separation allows for considerably reducing the energy consumption and the footprint of the dewatering system.

Preferably, the gravitational settling device has a total volume below the batch size of the distilllation device. In one embodiment, the gravitational settling device may have less than half the size of the batch volume, preferably one third of the batch volume, most preferably one fourth of the batch volume, or even one fifth of the batch volume. Thereby disturbance of the settling/decanter separation is reduced. Further preferably, the settling chamber of the gravitational settling device has a tall and slim design, thereby promoting the gravitational separation while reducing any stir-up of the sludge in the settling chamber which may lead to a dispersion of continuous phase water components. Further preferably, the gravitational settling device is configured for operation in a flow-through manner.

Further according to one embodiment of a system for separating oil/water sludge, the settling chamber of the gravitational settling device has an aspect ratio of a maximum dimension in horizontal directions to a vertical dimension is at least 1:5, or at least 1:10, preferably at least 1:20, more preferably at least 1:25, or even at least 1:30, or even at least 1:50. The effect of a slim and tall settling volume is that the system remains operable on-board of a marine vessel despite the roll/yaw/pitch movements of the marine vessel at sea, because the slim and tall design prevents upsetting of the settling process due to vessel movements. A slim and tall design is therefore preferred in order to reduce any such upsetting and prevent it from significantly affecting the separation efficiency. The exact choice of the required aspect ratio may depend on the actual marine vessel and the expected vessel movements under normal operation. However, aspect ratios of at least 1:20 may be considered as suitable for operation in most sea states, and aspect ratios of at least 1:30 may be considered as a safe choice for operation in a vast majority of sea states. When the liquids to be separated by the gravitational separation step have densities that are close to each other, a high separation performance is desirable. This is e.g. the case when working on heavy fuel sludges comprising hydrocarbons with a relative density of up to 0.98 or even 0.99. Furthermore, the gravitational separator device is designed to be operated in a flow through manner or at least for relatively short dwell times, where essentially only the continuous phase water present in the sludge is removed. The liquid component collected by the oil outlet therefore typically comprises, besides the hydrocarbon oils also a dispersed phase of water droplets. The dispersed water content further brings the density of the liquid component to be skimmed closer to that of the continuous phase water. A taller design with a higher aspect ratio will have an improved performance for separating liquids with a small difference in density. When dimensioning the gravitational separator a minimum horizontal dimension should provide sufficient clearance to avoid clogging of the settling volume by highly viscous hydrocarbon components of the oil/water sludge. Typically a couple of centimetres will be sufficent as a minimum clearance.

Further according to one embodiment of a system for separating oil/water sludge, the gravitational settling device has a first chamber and a second chamber separated from the first chamber by a separation wall, wherein the first and second chambers communicate with each other through an opening in a bottom portion of the separation wall. Settling separation occurs in the first chamber, where oily constituents from the sludge accumulate in a top portion of the first chamber from where the thus pre-concentrated oil is collected, and water descends to and accumulates at the bottom portion of the first chamber. The second chamber communicates with the first chamber only in a bottom portion where water settling out from the sludge accumulates and forms a siphon trap preventing oily components from reaching the water outlet. Via the siphon trap, the second chamber collects clean water from the bottom of the first chamber, where it is expected to have the highest purity within the first chamber, before discharging the collected water to a clean water tank. The first chamber thus forms the settling chamber of the gravitational settling device, whereas the second chamber functions as a drain conduit for collecting clean water from the bottom of the settling chamber, and transferring the clean water to the water outlet.

For the siphon trap to work properly, most preferably, the sludge inlet is configured so as to inject the sludge into the first chamber at a height above the opening in the separation wall, thereby avoiding contamination of the water in the second chamber with oily components by direct introduction of sludge from the sludge inlet.

While coalescence of dispersed droplets may occur, the gravitational settling device is configured to be operated in a regime, where mainly water that already at the sludge inlet is present in the continuous phase is separated out. Purpose of the gravitational settling device is to perform a rough pre-separation of the sludge, where most of the continuous phase water is removed from the sludge prior to performing the distillation process. The dwell time of the sludge in the settling chamber of the gravitational settling device is therefore not limited by time or coalescence dynamics or the settling speed of dispersed phase water droplets, since removal of the emulsified water is performed in the subsequent distillation treatment. The gravitational settling device may thus be operated at a higher maximum flow rate.

Further according to one embodiment of a system for separating oil/water sludge, the oil outlet is configured for collecting pre-concentrated oil from a first overflow weir of the first chamber and the water outlet is configured for collecting water from a second overflow weir of the second chamber, wherein the second overflow weir is arranged at a weir height difference h below the first overflow weir. The first overflow weir allows for skimming the top portion of the body of fluid in the first chamber. The first chamber forms the settling chamber of the gravitational settling device. Hydrocarbon oil lighter than water and a mixture of such hydrocarbon oils comprising a dispersed phase of water accumulate in the top portion of the first chamber. Continuous phase water accumulates at the bottom and gradually fills up the settling chamber. In order to keep the continuous phase water from spilling over to the oil outlet, the lower portion of the settling chamber has to be drained. This may be done by periodically emptying the first chamber through a drain valve at the bottom of the first chamber. Preferably, however, the bottom portion of the first chamber is drained in a continuous flow by transferring the water from the bottom of the first chamber to the second chamber comprising the second overflow weir. The water leaves the second chamber in a continuous flow over the second overflow weir, provided the second overflow weir is arranged at a vertical level below the first overflow weir of the first chamber. Means for adjusting the weir height difference may be provided in order to allow for adaptation of the gravitational settling device to different relative density regimes for handling different sludge compositions/cuts with respect to the hydrocarbon oil components contained therein.

Further according to one embodiment of a system for separating oil/water sludge, the first chamber is formed as a jacket around the second chamber. The jacket thus forms the settling chamber of the gravitational settling device. The jacket has a given thickness, which is inherently less than the overall diameter of the outer tube, namely the distance between the radially outwardly facing surface of the inner tube and the radially inwardly facing surface of the outer tube. Nevertheless, the overall horizontal extension of the settling volume defined by the jacket is considered the relevant maximum horizontal dimension of the settling chamber. However, the particular configuration of the settling chamber as a jacket around a central tube, will add to reducing the disturbance of the settling process due to vessel movements as compared to a simple cylindrical volume. This embodiment is particularly advantageous in a tall and slim design, where a small jacket thickness will further supress stir-up of the sludge in the settling chamber.

Advantageously according to one embodiment of the system for separating oil/water sludge, the first chamber is defined between an outer tube, which is closed at the bottom, and an inner tube separating the first chamber from the second chamber defined within the inner tube, wherein the inner tube comprises an opening in a bottom portion so as to allow the first and second chambers to communicate. In this embodiment, the first overflow weir of the first chamber may be defined by an upper edge of the outer tube. The first overflow weir may be also be defined by apertures in an upper portion of the outer tube. The height of the first overflow weir may be adjustable by providing appropriate means for such adjustment, e.g. by providing adjustable apertures/slits in the outer tube. The overflow weir of the second chamber may be defined by a water overflow channel connecting the inside of the inner tube to a collection port at the outside of the outer tube in a top portion of the outer tube. According to one embodiment, the water overflow channel is essentially horizontal.

Further according to one embodiment of a system for separating oil/water sludge, the sludge inlet is in a vertical direction arranged in a middle portion of the height of the settling chamber. The sludge is injected into the settling chamber through the sludge inlet. The lighter constituents of the sludge are collected from a top portion of the first chamber, whereas the heavier constituents of the sludge are collected from the bottom portion. To avoid disturbance of the already separated constituents, the sludge inlet is advantageously arranged at a height in a middle portion of the settling chamber between, and preferably remote from, the portions of the first chamber from which the separated constituents of the sludge, i.e. pre-concentrated oil and clean water, are collected. Advantageously, the sludge inlet is arranged in a middle portion, so as to inject sludge at a height between 10% and 90%, alternatively between 20% and 80%, alternatively between 30% and 70%, or at a middle third of the height of the settling chamber. For example, the sludge inlet may advantageously be arranged at about half height of the settling chamber. As mentioned above, in embodiments with a first and a second chamber of the gravitational settling device, the sludge inlet is arranged to inject sludge into the first chamber at a height above the opening of the separation wall connecting the first chamber with the second chamber.

Further according to one embodiment of a system for separating oil/water sludge, the gravitational settling device further comprises a means for heating the settling chamber. Purpose of the heating element is to control the temperature of the sludge, thereby affecting the viscosity of the constituents of the sludge and consequently controlling the dynamics of the separation process in the settling chamber. By heating the liquid in the settling chamber, the settling kinetics is accelerated and the separation efficiency is improved. In a preferred embodiment, the gravitational settling device is shaped as a slim and tall vertically arranged tube and the heating means are one or more heating elements wrapped around the outside of the outer tube and packed in thermal insulation. A heating element wrapped around the outside of the gravitational settling device, is further advantageous in combination with the embodiment where the first chamber is formed as a jacket around the second chamber rather than vice versa, because heating in the former is applied directly to the first chamber, whereas in the latter case, the first chamber would be heated via the intermediary of the second chamber.

Alternative or in addition thereto, the sludge may also be preheated by heating means provided in a sludge transfer line from the sludge tank to the sludge inlet, e.g. by means of a heat exchanger exploiting excess heat from the cooling system of the marine vessel.

Further according to one embodiment of a system for separating oil/water sludge, the distillation device further comprises a pre-heating chamber arranged between the feed port and the processing chamber, so as to pre-heat pre-concentrated oil received through the feed port to a process input temperature prior to loading the processing chamber with the pre-heated and pre-concentrated oil. The pre-heating chamber is filled through the feed port of the distillation device with pre-concentrated oil collected from the oil outlet of the gravitational settling device. In the pre-heating chamber, the pre-concentrated oil is brought to an input temperature for treatment in the processing chamber. The pre-heating chamber communicates with the processing chamber through a load valve through which a batch of the pre-concentrated and preheated oil is loaded into the processing chamber. The heat used for pre-heating the pre-concentrated oil in the pre-heating chamber may be derived from any suitable source; including thermostate controlled heating elements provided at or in the pre-heating chamber, heat-exchangers providing excess heat from other processes on board of the marine vessel to the pre-heating chamber. In a particularly advantageous embodiment, the pre-heating chamber is arranged adjacent to and in good thermal contact with the processing chamber so as to harvest excess heat from the processing chamber for pre-heating, thereby reducing or preferably obviating any need for dedicated pre-heating elements in the pre-heating chamber. Thereby both energy efficiency and reliability of the system are improved.

A further advantage of the pre-heating chamber is that it also acts as a pre-filling chamber in repetitive batch processing: As soon as a first batch has been transferred from the pre-heating chamber to the processing chamber, the next batch can already be accumulated in the pre-heating chamber while at the same time treating the first batch in the processing chamber. Thereby time is saved and the throughput of sludge that can be treated by the system is increased.

Advantageously, the gravitational settling device is configured for a throughput capacity that corresponds to or is higher than the throughput capacity of the distillation device, such that the next batch at the latest is ready when the treatment of the first batch is finished and any residual liquid/waste oil has been removed from the process chamber. Thus the process chamber can immediately be loaded again with the next batch to be treated.

Further according to one embodiment of a system for separating oil/water sludge, the heating means of the processing chamber comprise a plurality of heating elements, wherein a first group of heating elements provides a continous basic heat source and a second group of heating elements provides a temperature controlled heat source. The first group of heating elements may be switched on and off and provides a gross basic source for heating the batch to be processed. The second group of heating elements is configured for adjusting the process temperature in a fine controlled manner in response to control parameters, that may e.g. be derived from temperature signals or other signals measured in and/or around the processing chamber. As mentioned above in the context of pre-heating, the heating elements of the processing chamber may in principle be powered from any suitable source, including electrical, fuel fired, heat-exchangers re-using excess heat from other processes. However, an essentially self-contained system set-up requiring only a minimum of external supply connections is to be preferred, in particular in the case of retro-fitting existing marine vessels with the present system. Also, heater element control may be performed according to any suitable scheme. The temperature control may include thermostat control, such as fluid control valves, electrical power control and the like in response to electrical, optical, thermal and/or fluidic signals representative of the temperature.

According to a preferred embodiment, the process chamber heating means are controlled in response to a liquid temperature of the oil/water mixture so as to keep the oil/water mixture during the distillation process within a predetermined range around a target processing temperature.

Further according to one embodiment of a system for separating oil/water sludge, the system further comprises condensing means for condensing vapour retrieved from the process chamber through the vapour port. A condensing device, such as a condensing dehumidifier using a cooling device, provided in combination with the vacuum pump promotes the collection of water retrieved in the vapour phase. Preferably, the condensing means are arranged in combination with the vacuum pump, e.g. in a combined vacuum pump/condenser unit.

Further according to one embodiment of a system for separating oil/water sludge, the distillation device further comprises an over-pressure valve for limiting the pressure in the processing chamber and/or a venting valve for use during loading and/or discharging of the process chamber. The distillation device may comprise further means for controlling the pressure in the processing chamber, said further means including an over-pressure valve and/or a venting valve for use during loading and/or discharging of the process chamber. An overpressure valve is advantageously provided as a safety valve, wherein the overpressure valve opens if the pressure in the processing chamber exceeds a pre-determined threshold pressure, such as above 2 bar. A venting valve may be used for allowing air/gas to escape from the inside of the processing chamber during loading a batch for treatment and/or for allowing air/gas to enter the processing chamber when a treated batch is discharged. The venting valve is opened in these cases and closed otherwise. Advantageously for safety reasons, the venting valve is of the normally open type, such that the venting valve opens in case of e.g. a power failure.

Further according to one embodiment of a system for separating oil/water sludge, the means for transferring sludge, water, pre-concentrated oil, and/or concentrated waste oil comprise conduits, remotely controllable valves, manual valves, and/or pumps. Means for transfer may include simple conduits (e.g. tubes or hoses), wherein the transfer is driven by a pressure difference that may arise e.g. due to a level difference between the respective recipients. The transfer may be controlled by valves, wherein motorized valves may be controlled in an automated manner, and manual valves may be used for manual operation of the device, e.g. during installation, start-up, test, reset, service, or the like. The transfer means may further comprise suitable pumps. Advantageously according to a preferred embodiment, a sludge pump is of a type preventing or at least reducing any agitation of the pumped liquid to a minimum so as to avoid dispersion of continuous phase water into droplets. Advantageously, the sludge pump is a hose pump.

Further according to one embodiment of a system for separating oil/water sludge, the means for transferring sludge from the sludge tank to the sludge inlet of the gravitational settling device further comprise a particle filter, and/or an automatic air-vent. Advantageously, the sludge is passed through a particle filter to remove solid contaminants from the sludge prior to injecting the sludge into the gravitational separation device. The filter thus prevents solid contaminants from entering the system, and in particular prevents entrainement of the solid contaminants through the water outlet of the gravitational settling device into the clean water tank. Furthermore, the solid contaminats may clog the gravitational settling device or even get entrained through the oil outlet and corrupt functioning of any of the subsequent components. In one embodiment, the particle filter retains particles down to a size of about 5µm. An automatic air-vent prevents introduction of air into the gravitational settling device, which otherwise may impede the separation process therein.

Advantageously in any of the disclosed embodiments of the invention, a gravitational settling device further comprises a drain outlet for draining fluid from the bottom of the gravitational settling device and/or the processing chamber further comprises a drain port for draining fluid from the bottom of the processing chamber. Such means for draining the system facilitate service and maintenance of the system. Preferably, such a system further comprises means for returning the drained fluid to the sludge tank, such as conduits, remotely controllable valves, manual valves, and/or pumps. By returning any liquid drained from the system through the drain outlet and/or drain port to the sludge tank, undesirable spill is avoided and the drained liquid may easily be recirculated for further/additional treatment in the system.

According to a further aspect of the invention, a method for separating an oil/water sludge, such as oil/water sludge generated on a maritime vessel, into a clean water component and a dewatered waste oil component in a repetitive batch process is provided, the method comprising the steps of
- loading a batch of an oil/water mixture as a liquid phase in a processing chamber of a vacuum distillation device,
- reducing the pressure in the processing chamber to a processing pressure below atmospheric pressure,
- heating the liquid phase to a liquid phase processing temperature so as to release water from the oil/water mixture of the liquid phase into a vapour phase above the liquid phase and removing vapour from the vapour phase in the processing chamber until the water content of the liquid phase has reached a pre-determined target value, and subsequently
- transferring a residual liquid from the processing chamber to a waste oil tank, wherein the method further comprises
- pre-treating the sludge in a gravitational settling device so as to remove continuous phase water from the oil/water sludge prior to treatment in the distillation device, wherein oil/water sludge is transferred from a sludge tank through a sludge inlet to a middle portion of a settling chamber of the gravitational settling device, wherein continous phase water present in the oil/water sludge is accumulated in a bottom portion below the middle portion of the settling chamber, collected from said bottom portion through a water outlet, and transferred to a clean water tank, and wherein remaining components of the oil/water sludge including dispersed phase water is accumulated as a pre-concentrated oil/water mixture in a top portion above the middle portion of the settling chamber, collected from said top portion through an oil outlet, and transferred to the vacuum distillation device for further treatment.

Advantages of the method for separating an oil/water sludge correspond analogous to the advantages discussed above with respect to the system for separating an oil/water sludge. Accordingly, further embodiments of the method for separating an oil/water sludge and their advantages are readily derived from a combination of the method with the above described functioning of the special technical features of any of the embodiments of the system for separating oil/water sludge.

For example, an advantageous method according to one embodiment further comprises feeding the pre-concentrated oil from the gravitational separation device to a buffer volume prior to loading it to the process chamber so as to prepare a new batch while a previous batch is being processed in the processing chamber. Preferably, the buffer volume is a pre-heating chamber associated with the distillation device as described above. Preferably, the new batch is thus pre-heated to a process input temperature exploiting excess heat from the processing chamber, wherein the heat transfer from the processing chamber to the pre-heating chamber should be designed so as to avoid cold spots inside the processing chamber that may lead to counterproductive condensation of vapour within the processing chamber.

Furthermore, an advantageous method according to one embodiment further comprises heating the liquid in the settling chamber of the gravitational settling device in order to accelerate the separation kinetics in the gravitational settling device.

Furthermore, an advantageous method according to one embodiment further comprises pre-conditioning the sludge prior to injecting the sludge into the settling chamber of the gravitational settling device by performing one or more of pre-heating the sludge, filtering the sludge, and/or removing air from the sludge.

Advantageously according to the invention, the distillation process is terminated upon fulfilment of a process stop criterion. In its simplest form and according to a broader aspect of the invention, the process stop criterion may be the expiry of a pre-determined process duration. However, according to a preferred embodiment, the process stop criterion takes into account the water content of the batch of the oil/water mixture under treatment. The distillation process including heating of the oil/water mixture and removal of the evaporated water is continued until the water content of the oil/water mixture has reached a pre-determined target value.

Further according to one embodiment of a method for separating oil/water sludge, fulfilment of the criterion that the water content of the oil/water mixture has reached the pre-determined target value is decided by comparing a vapour phase temperature to the liquid phase temperature in the process chamber, wherein the criterion is fulfilled if the liquid phase temperature exceeds the vapour phase temperature by a pre-determined threshold value representative of the predetermined target value for the water content of the residual liquid.

According to a preferred embodiment, fulfilment of the criterion that the water content of the oil/water mixture has reached the pre-determined target value is decided by comparing a vapour phase temperature to the liquid phase temperature in the process chamber. Further advantageously the criterion is fulfilled if the liquid phase temperature exceeds the vapour phase temperature by a pre-determined threshold value representative of the predetermined target value for the water content of the residual liquid. Using temperature sensors for obtaining a measurable that is representative of the water content of the liquid phase in the process chamber during distillation allows for easy monitoring of the process stop criterion using simple and robust components that are compatibel with the harsh conditions in a marine vessel at sea. Using the temperature difference between the liquid phase temperature and the vapour phase temperature as the stop criterion has furthermore proven to be a reliable and predictable indicator of the process status, in particular when the water content of the oil/water mixture of the liquid phase approaches 5% by volume and below.

Observation of the liquid phase temperature alone may give an indication of the point where essentially all water is removed from the liquid phase. When supplying heat to the liquid phase, the liquid phase temperature rises. When stopping the heat supply, the temperature of the liquid phase containing water immediately drops, due to cooling by evaporation of water. The rapid cooling rate after switch off is therefore an indication of an efficient evaporation cooling mechanism, and thus an indication of the presence of water in the liquid phase. If the treatment in the processing chamber is continued to a point where no more water can be evaporated from the liquid phase, the efficient evaporation cooling mechanism is no longer available and the rapid cooling rate is no longer observed. Typically, the liquid phase temperature is then observed to clearly shoot above the temperature where the heat supply is switched off. More generally speaking, the change in evaporation cooling rate of the liquid phase in the process chamber may thus be used as an additional stop criterion for terminating the distillation process. For this purpose, the cooling rate may determined by any suitable in-situ measurement technique.

It is further noted that the above described control is advantageous also for a distillation process for dewatering an oil/water mixture without the pre-separation step by gravitational separation prior to loading the vacuum distillation device. Therefore, according to a broader aspect of the invention, a system and method for dewatering an oil/water mixture in a vacuum distillation system/method comprises (means for) monitoring a difference between the vapour phase temperature and the liquid phase temperature. Further advantageously, said system and method comprises (means for) terminating the vacuum distillation process when a pre-determined threshold for said temperature difference between the vaccum phase temperature and the liquid phase temperature is exceeded.

In the following, the invention is further explained referring to an exemplifying embodiment. The drawings show on
Fig. 1 a diagrammatic view of a system for separating oil/water sludge according to one embodiment of the invention,
Fig. 2 (a) a schematic cross-sectional view of a gravitational settling device according to one embodiment, (b) a cross-sectional detail of the top portion of the same embodiment, and
Fig. 3 a diagram of different parameters measured in the processing chamber as a function of time during a batch processing cycle.

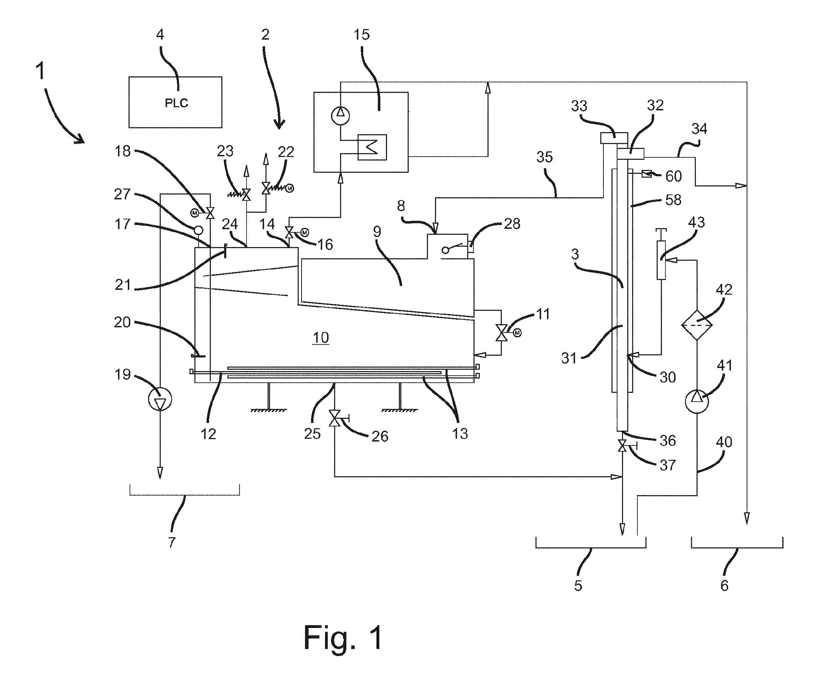

Fig. 1 shows a diagram of a sludge dewatering system 1 for separating oil/water sludge generated on a maritime vessel into a clean water component and a dewatered waste oil component in a repetitive batch process.

The system 1 comprises a vacuum distillation device 2, a gravitational settling device 3 and a control unit 4 for controlling the distillation process and operating the dewatering system 1 in an automated manner. The system 1 retrieves sludge from a sludge tank 5 of the marine vessel, treats the sludge to separate it into a clean water component, which is discharged to a clean water tank 6 of the marine vessel, and into a dewatered waste oil component, which is discharged to a waste oil tank 7 of the marine vessel. The content of the clean water tank 6 may be passed to a further purification apparatus, e.g. a traditional oil-water-separator (OWS) for a final purification step prior to discharge of the purified water overboard in agreement with international environmental regulations.

The vacuum distillation device 2 has a feed port 8 for loading a batch of an oil/water mixture to be treated, a pre-heating chamber 9, and a processing chamber 10 communicating with the pre-heating chamber via a motorized valve 11. The processing chamber 10 is provided with heating means 12, 13 in a bottom portion thereof. The heating means 12, 13 may be controlled by heating control means, e.g. via the control unit 4 in response to temperature signals obtained from the processing chamber 10. The processing chamber 10 is further provided with a vapour phase port 14 communicating with a top portion of the processing chamber 10. A vacuum pump 15 is connected to the vapour phase port 14 via a motorized valve 16 and is configured for removing water vapour from the processing chamber 10 so as to reduce the vapour phase pressure therein to below atmospheric pressure. The processing chamber 10 is further provided with a waste port 17 configured for retrieving dewatered waste oil from a bottom portion of the processing chamber 10. The waste oil is transferred to the sludge tank 7 via a motorized valve 18, with the help of a waste oil pump 19. Temperature sensors 20, 21 provide temperature measurements of different regions inside the processing chamber during distillation treatment. In particular, a first temperature sensor 20 is located in the bottom portion of the procesing chamber 10 and provides a liquid phase temperature reading. A second temperature sensor 21 is located in the top portion of the processing chamber 10 and provides a vapour phase temperature reading. The processing chamber 10 further comprises a venting port 24 equipped with a motorized valve 22 for venting the process chamber during loading of a new batch and discharging of dehydrated waste oil before and after distillation, respectively. Furthermore, an overpressure release valve 23 is connected to the venting port 24 operating in parallel to the venting valve 22. The overpressure valve 23 opens when the pressure inside the processing chamber exceeds a pre-determined threshold above atmospheric pressure. The overpressure valve 23 thereby implements a safety function to avoid damage to the system in case of any malfunction leading to an unintended pressure build-up inside the process chamber 10. A suitable threshold value is about 2 bar. The processing chamber 10 further comprises a drain port 25 with a drain valve 26 allowing for emptying the process chamber 10 and transferring the drained liquid to the to the sludge tank 5.

The gravitational settling device 3 pre-treats the sludge prior to loading the distillation device 2. The gravitational settling device 3 has a sludge inlet 30 for receiving sludge in a settling chamber 31, a water outlet 32 for releasing water, and an oil outlet 33 for releasing pre-concentrated oil. The gravitational settling device 3 of the embodiment shown in Fig. 1 has a first chamber forming the settling chamber 31, and a second chamber communicating with the first chamber at a bottom portion, so as to form a siphon trap. The sludge inlet 30 communicates with the first chamber to inject sludge into in a middle portion of the first chamber above the bottom portion, the oil outlet 33 collects a pre-concentrated oil/water mixture from a top portion of the first chamber above the middle portion, and the water outlet 32 collects water from a top portion of the second chamber. The water outlet is separated from the oil outlet by the siphon trap. The sludge inlet 30 is connected to the sludge tank via means 40 for transferring sludge from the sludge tank 5 to the sludge inlet 30 of the gravitational settling device 3. The sludge transfer means 40 through which sludge is transferred from the sludge tank 5 to the gravitaional settling device 3 may comprise a pump 41, preferably a hose pump, a particle filter 42, and an automatic air-vent device 43. The outlets 32, 33 of the gravitational device 3 are connected to the rest of the dewatering system 1 through means 34 for transferring water from the water outlet 32 of the gravitational settling device 3 to the clean water tank 6, and through means 35 for transferring pre-concentrated oil from the oil outlet 33 of the gravitational settling device 3 to the feed port 8 of the distillation device 2. The gravitational settling device 3 further comprises at a bottom portion a drain port 36 with a drain valve 37 allowing for emptying the gravitational settling device 3 and transferring the drained liquid to the to the sludge tank 5.

Advantageously the operation of the dewatering system 1 is at least partially automated by means of the control unit 4 configured to perform one or more control functions, wherein the control unit 4 communicates with the different components / elements / devices of the dewatering system via input/output (I/O) means. The communication of the control unit with the rest of the dewatering system may comprise receiving temperature signals from the temperature sensors 20, 21; receiving a pressure signal from a pressure sensor 27 in the process chamber 10; receiving a level signal from a level sensor 28 in the feed port 8 of the distillation device; sending a signal to actuate (open/close) any of the motorized valves 11, 16, 18, 22; sending a signal to control any of the pumps 15, 19, 41 in order to switch the pump on and off, or, if applicable, to adjust a variable pump speed setting; sending a signal to control any of the heating elements 12, 13 individually or in combination, in order to switch the heating elements on and off, or, if applicable, to adjust a variable heating power setting. The control unit 4 may further receive external input and provide external output, e.g. via a user interface and/or through an interface for communication with external sensors, devices and control units. The control unit 4 may for example be of the PLC type. However, any suitable computing means comprising data storage means, data processing means and signal input/output means in a standalone, distributed and/or networked fashion may be used. Furthermore, the control unit may 4 also communicate with or be an integrated part of a larger process control system and/or vessel management system, and may thus comprise an interface compliant with a standardised communication protocol.

The control functions performed by the control unit 4 may comprise control of the loading of the distillation device, e.g. by sending a signal to switch on the sludge pump 41 and operate the sludge pump 41 as long as the level sensor 28 indicates that the level of pre-concentrated oil in the pre-heating chamber 9 is low, sending a signal to switch off the sludge pump 41 when said level is high and a new batch is ready for distillation processing, and sending a signal to open the motorized valves 11 and 22 to transfer the new batch from the pre-heating chamber 9 to the processing chamber 10, when the latter is ready to receive the new batch. The control functions performed by the control unit 4 may also comprise control of the heating elements during the distillation process, e.g. by sending a signal to control any of the heating elements 12, 13 in response to one or more temperature signals received from the temperature sensors 20, 21 according to a control scheme stored in the control unit 4 including routines for warm-up, distillation, and termination of a batch cycle. The control functions performed by the control unit 4 may also comprise control of the vapour phase pressure, of the retrieval and condensation of water vapour via the vapour phase port, e.g. by sending signals to close the motorized valves 11, 18, 22; sending a signal to open the motorized valve 16, and sending a signal to start vacuum pump 15. The control functions performed by the control unit 4 may also comprise control of the discharging of dewatered waste oil via the waste port 17, e.g. by sending a signal to open motorized valves 18, 22; and sending a signal to start and operate pump 19 until the dewatered waste oil is removed from the processing chamber 10. The control functions may further include functions/programs implementing procedures for safety, reset, and/or recovery upon detection of an exceptional operational state, such as a system failure, a component failure, an excess process pressure or temperature reading, or a power outage. The control functions may further include overwrite of any automated/programmed functions in response to external input via the user interface and/or the communication interface for external input/output, wherein an automated overwrite may also be provoked by the detection of an exceptional system status from system data monitored through the communication interface for external inpu/output. The control unit 4 may be configured to perform any of these control functions individually and/or in combination with any of the other control functions, e.g. as a part of an automated process program.

Before start-up of the dewatering system 1, the pre-heating chamber 9 and the process chamber 10 are empty. The heater elements 12, 13 and the vacuum pump 15 are off. The valves 11, 16, 18, 23, 26, and 37 are closed, the venting valve 22 is open , and the feed port 8 is ready for receiving oil/water mixture. Upon start-up, the gravitational settling device 3 is pre-filled with water to provide a siphon trap of clean water. Safety valve 23 only opens if the pressure inside the process chamber exceeds a predetermined safety threshold, here 2 bar. Furthermore, the control unit 4 receives from the float sensor 28 a signal that the pre-heating chamber is not filled yet, and thus ready to receive oil/water mixture. The control unit 4 then starts the sludge pump 41, preferably a hose pump or a similar pump that avoids or at least minimizes any dispersion of continuous phase water into a droplet phase by the pumping process. The sludge pump 41 receives sludge from the sludge tank 5 on the suction side and passes the sludge to a particle filter 42, here configured for retaining particles with a particle size of 5 µm and above. The filtrate passes through an automatic air-vent device 43 to remove any entrained air, and is then injected through sludge inlet 30 at a height into a middle portion of the settling chamber of the settling device 3. Continuous phase water descends, upon entering through the sludge inlet 30, to a bottom portion of the settling chamber, passes the siphon trap, and is via water outlet 32 and conduit 34 discharged to the clean water tank 6. Hydrocarbon oils lighter than water that are contained in the sludge, and which typically include a considerable amount of water in a dispersed phase, rise to a top portion of the settling chamber from wher they are collected as pre-concentrated oil/water mixture, and discharged through an oil outlet 33. From the oil outlet 33, pre-concentrated oil/water mixture is transferred via conduit 35 and the feed port 8 to the pre-heating chamber 9 until the level indicator 28 indicates that the pre-heating chamber 9 is full, i.e. a new batch is complete, and the pump 41 is stopped. From the pre-heating chamber 9, the new batch of oil/water mixture is transferred to the processing chamber 10 for distillation treatment, by opening valves 11 and 22. When the transfer is completed, both valves 11, 22 are closed again. The float level sensor 28 now indicates that the pre-heating chamber 9 is again ready to receive a new batch of preconcentrated oil/water mixture, and the pump 41 is started again.

In the meantime, valve 16 of the vapour phase port 14 is opened, and the vacuum pump 15 is started to evacuate the processing chamber 10 and maintain it at a process pressure below atmospheric pressure, e.g. about 0.1 bar. The vacuum pump 15 has to be suited for pumping gas with a high content of water vapour, and has to be dimensioned to be capable of maintaining the desired vacuum pressure in the processing chamber 10 during the dewatering process. Advantageously, the vacuum pump may be of the liquid ring type with water as the sealing/working fluid. The vacuum pump 15 may comprise condensing means for separating out the water from the pump stream. In a liquid ring pump, condensated water from the pump stream may be fed back, e.g. via a refill reservoir, to the maintenance of the liquid ring. Excess water condensated from the vacuum pump stream is then collected in the clean water tank 6.

When the pre-concentrated oil is received in the processing chamber 10 it has a process input temperature determined by the heating of the sludge prior to/during the gravitational separation step and by the pre-heating in the pre-heat buffer 9. The heating elements 12, 13 are switched on and fully energized to bring the oil/water mixture to the processing temperature. The control unit 4 receives temperature readings of temperatures in the process chamber, wherein a first sensor 20 measures the temperature of the liquid phase in a bottom portion of the process chamber 10, and wherein a second sensor 21 measures the temperature of the vapour phase in a top portion of the process chamber 10. Gross heating elements 13 are switched off when the liquid phase temperature exceeds a first liquid phase temperature. Fine heating element 12 continues to heat the liquid phase until a maximum liquid phase temperature is reached, and is then switched off. At this temperature, water contained in the liquid phase is converted into vapour, whereas the hydrocarbon oil components of the liquid phase are kept in the liquid phase. The water vapour leaves the liquid phase, thereby cooling the liquid phase (evaporation cooling). As a consequence, the liquid phase temperature reading drops again. The heating element 12 is switched back on again, if the liquid phase temperature drops below a minimum liquid phase temperature, which is below the maximum liquid phase temperature, but above the first liquid phase temperature. The processing temperature during the distillation treatment of the oil/water mixture is thus kept within a temperature range between the minimum and the maximum liquid phase temperatures. At a process pressure of about 0.1 bar, the first temperature may, for example, be about 55 degrees C, the maximum liquid phase temperature about 69 degrees C, and the minimum liquid phase temperature about 67 degrees C. Throughout the distillation process, the vacuum pump/condenser unit 15 produces condensed water on the exhaust side. This condensed water is transferred to the clean water tank 6.

The distillation process is terminated when a pre-determined stop criterion is fulfilled. In a simple embodiment, the stop criterion may be the expiry of a pre-determined processing period, wherein the processing period starts when the liquid phase temperature reaches the processing temperature for the first time, and expires at a pre-determined time delay after the start. Preferably, however, the stop-criterion is linked to the residual water content of the oil water mixture. To this end, the control unit 4 further monitors the vapour phase temperature from sensor 21, and compares it to the current liquid phase temperature from sensor 20. Suitable temperature sensors may e.g. be of the resistive type, such as so-called P100 resistive temperature sensors. Generally, the vapour phase temperature follows the liquid phase temperature of the mixture, i.e. the former is lower than the latter. As the water content of the liquid phase falls, the vapour phase temperature is observed to lack more and more behind the liquid phase temperature. Below a given level, the vapour phase temperature drops more pronounced, and the difference between the liquid phase temperature and the vapour phase temperature noticeably increases. A stop criterion may be formulated as terminating the distillation process if the temperature difference between the vapour and liquid phases exceeds a pre-determined value. The temperature measurement in combination with the temperature difference criterion has turned out to yield particularly reliable, reproducible and predictable results for the termination of the distillation process, and even for predicting the residual water content of the dewatered waste oil.

After the distillation process has ended, the control unit 4 switches off the heating, and after an optional delay also switches off the vacuum pump/condenser unit 15, closes valve 16 of the vapor phase port 14, opens valves 18 and 22, and starts the disposal pump 19. The remaining liquid phase is thus removed from the bottom of the process chamber 10 and transferred as dewatered waste oil to the waste oil tank 7. When this transfer is finished, the valve 18 is closed, and a new batch of oil/water mixture may be loaded through valve 11 from the pre-heating chamber 9 into the processing chamber.

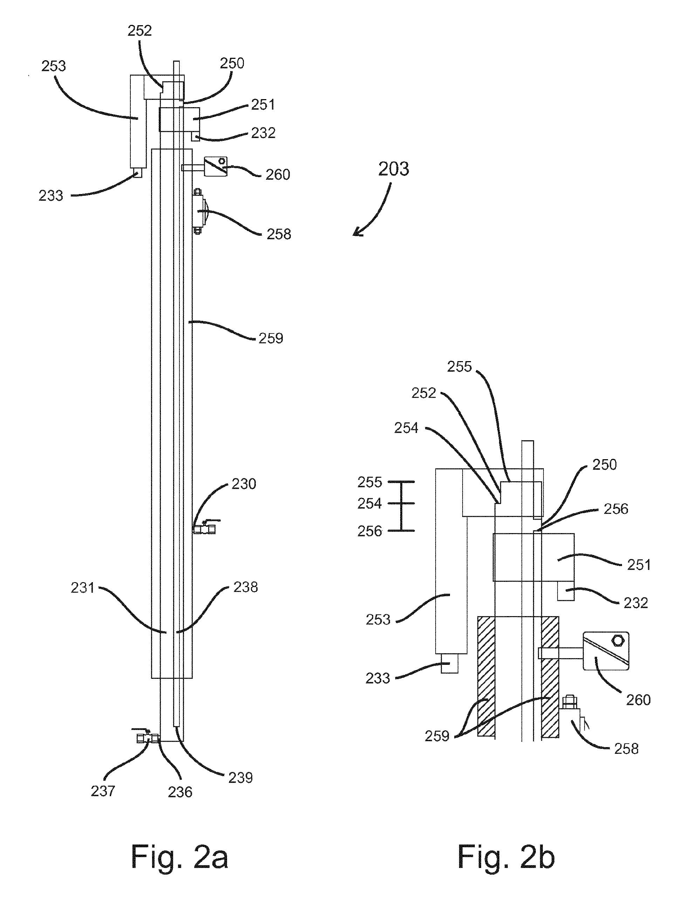

Fig. 2a shows a schematic cross-sectional view of a gravitational settling device 203 for use in a dewatering system 1 for dewatering oil/water sludge retrieved from a sludge tank 5 on board a marine vessel. Fig. 2b shows an enlarged detail of the top portion of the same embodiment of the gravitational settling device 203. In a middle portion, the gravitational settling device 203 has a sludge inlet 230 through which the oil/water sludge is fed to a first chamber 231. The settling chamber 231 is closed at the bottom, but comprises a drain port 236 with a drain valve 237 at the bottom. The drain port allows for emptying the gravitational settling device 203 if needed, e.g. for cleaning, or for resetting the settling separation process to a start-up state. The gravitational settling device 203 further comprises a second chamber 238 communicating with the first chamber 231 through an opening 239 at the bottom thereof. The opening 239 is placed in the bottom region of the first chamber 231 so as to form a siphon trap at a bottom portion below the middle portion of the gravitational settling device 203. Advantageously, as in the configuration of Fig. 2, the first and second chambers 231, 238 may be formed by two tubes of different diameter inserted into each other, such that the first chamber 231 forms a jacket in the spacing between the outer tube and the inner tube, wrapped around the second chamber 238 formed inside the inner tube. Gravitational separation of the oil/water sludge is performed in the first chamber 231, wherein lower density liquid components accumulate in a top portion, and higher density liquid components accumulate in a bottom portion of the first chamber.

The higher density liquid component accumulating in the bottom portion of the first chamber 231 is essentially water, which via the siphon trap enters the second chamber 238, and leaves the second chamber 238 through a water overflow 250 at the top of the second chamber 238. The water from the water overflow 250 is collected by a water overflow collector 251 and discharged through the water outlet 232. The lower density liquid components accumulating in the top portion of the first chamber 231 comprise hydrocarbon oils, which typically further comprise water in the droplet phase dispersed in the hydrocarbon oils. The lower density liquid components leave the first chamber as a pre-concentrated oil/water mixture through an oil overflow 252 at the top of the first chamber 231. The pre-concentrated oil/water mixture from the oil overflow 252 is collected by an oil overflow collector 253, and is discharged through the oil outlet 233.

The level 256 of the water overflow 250 is placed at a water overflow weir height, and the level 254, 255 of the oil overflow 252 is placed at an oil overflow weir height, wherein the oil over flow level 254, 255 is above the water overflow level 256. The weir height difference h between the oil overflow weir level 254, 255, and the water overflow weir level 256 may be adjusted between a lower oil overflow level 254 and an upper oil overflow level 255 according to the difference in density between the liquid components to be separated. The closer the relative density of the lower density liquid components to be retrieved through the oil overflow is to water, the lower the weir height difference is to be selected. Depending on the source from which the sludge is originally collected, the hydrocarbon oils in the sludge may, for example, comprise heavy fuels with a relative density fairly close to water, between 0.95 and 0.98 or even up to 0.99, wherein pure water has a relative density of 1. The hydrocarbon oils may also comprise so-called light oil with a relative density of below 0.9, below 0.85, or even below 0.8. A dimensioning example including different weir height differences for different types of lower density liquid components is given below for a particular gravitational settling device 203. The oil overflow weir levels 254, 255 may e.g. be adjusted by providing a vertical slit in the upper end of the outer tube forming the oil overflow, and plugging the slit depending on the expected relative density of the lower density liquid components to be skimmed by the oil overflow 252.

Preferably, the gravitational separation is promoted by heating the oil/water sludge to a gravitational separation temperature. Preferably, the gravitational separation temperature is above 40 degrees C, more preferably between 40 and 50 degrees C. As mentioned above, the sludge may already be pre-heated on the way from the sludge tank 5 to the sludge inlet 230, e.g. by means of a heat exchanger exploiting excess heat from the cooling system of the marine vessel. The gravitational settling device 203 is further provided with a heater 258 with a heater element wrapped around the outer tube of the first chamber and encapsulated by thermal insulation 259. Furthermore, the heater 258 may be controlled by means of a thermostate 260.

As mentioned above, the gravitational settling device 203 is configured and operated for the purpose of performing a first rough dewatering by separating out a continuous phase of water already present in the sludge received from the sludge tank 5. The following is a dimensioning example designed for a batch volume of the distillation device of about 70l, and a maximum flow capacity for supplying sludge to the sludge inlet 230 of 50 litres/hour. The first chamber is defined between an outer tube with an inner diameter of 85 mm, and an inner tube with an outer diameter of 22 mm. The inner tube has an inner diameter of 18 mm and defines the second chamber. The first and second chambers have an overall height of about 2.5 metres. The sludge inlet 230 is placed at a level of about 0.8 meters above the bottom of the first chamber. The first chamber 231 where gravitational separation takes place has thus a volume of about 13 litres, i.e. about or even less than one fifth of the total batch volume of the distillation device 2. The second chamber 238 has a volume of about 1 litre. The lower oil overflow level 254 suited for heavy fuel oils is placed at a lower weir height difference B of about 50 mm above the water overflow level 256, and the higher oil overflow level 255 suited for retrieving light oil components is placed at an upper weir height difference A of about 90 mm above the water overflow level 256.

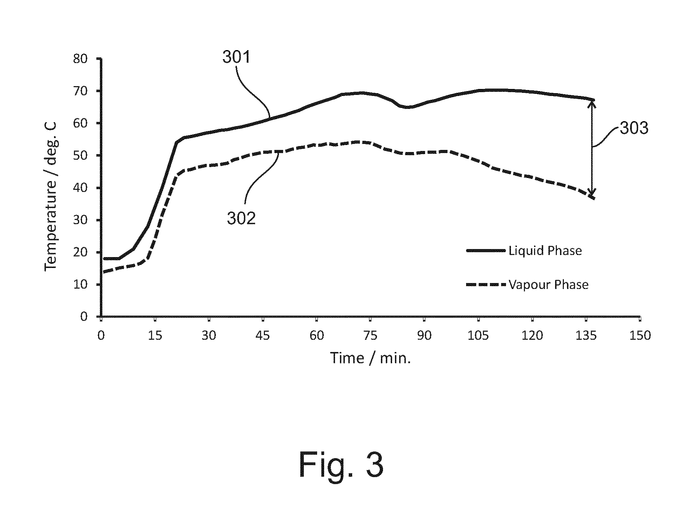

Fig. 3 shows an example of a temperature characteristics over time as measured during operation of an embodiment of a dewatering system 1 as described above. The liquid phase temperature is indicated by a solid line 301, and the vapour phase temperature is indicated by the broken line 302. As the dewatering process progresses, more and more water is removed by evaporating water from the oil-water mixture in the liquid phase, and pumping the vapour out of the processing chamber 10 by means of the vacuum pump 15. The vapour phase temperature 302 lacks more and more behind the liquid phase temperature 301. When a pre-determined threshold for the temperature difference 303 is exceeded, the process is terminated. In the present example, the threshold for the temperature difference 303 is 30 degrees C.

### EXAMPLE

In the following, an example is given for a dewatering process performed on oil/water sludge retrieved by means of a sludge pump 41 from the sludge tank 5 on a maritime vessel. An embodiment of the system corresponding to the dewatering system 1 described above with respect to Fig. 1 has been used.

### At start-up

Emulsified sludge (0,85 -0,95 kg/l) is pumped at 50 litres/hour, using a hose pump 41, through a 3 kw electrical, thermostat controlled, heat exchanger (not shown), heating the sludge to 50 °C. Furthermore, the sludge is pumped through a 5µm pre-conditioner particle filter (42) and into the 15 litre volume sized gravitational settling device 3. Inside the gravitational settling device 3, an oil/water mixture is pre-concentrated to a water-content below 15%, and overflows on the top, and transferred from the oil outlet 33 to the inlet 8 of the 72 litres volume pre-filling/heating chamber 9 on the distillation device 2. Meanwhile, continuous phase water is drained from the bottom of the settling device, up to an overflow, 9 cm below the oil overflow, and transferred from the water outlet 32 into a clean water tank 6.

### After approximately 90 minutes

The floating switch 28 inside the pre-filling/heating chamber 9 signals that chamber 9 is full and the filling pump 41 stops automatically. Collected sludge is transferred from the pre-filling/heating chamber 9 down to process chamber via a time controlled valve 11. After 90 seconds, the valve 11 closes again and the filling pump 41 starts to prepare the next batch. The venting valve 22 closes after 50 seconds, the vacuum pump 15 starts, and all three heating elements 12, 13 start heating the liquid inside the process chamber 10. The boiling process is started with a vacuum pressure of approximately between 0,05 - 0,15 bar in the process chamber 10.

### After approximately 105 minutes

The liquid temperature 20 reaches a first set point of 55°C and the group of heating elements 13 stops. Heating element 12 continues heating up to an upper set point of 69°C.

### After approximately 125 minutes.

The liquid temperature 20 reaches the upper set point 69°C and the heating element 12 stops. The heating element 12 is switched back on if the liquid temperature 20 drops below a lower set point of 65°C. Continued heating using heating element 12 thus keeps the liquid temperature 20 between the set points 65°C and 69°C. Simultaneously with the liquid phase temperature 20, a vapour phase temperature 21 is monitored. In the beginning, the vapour phase temperature 21 stays about 10°C below the liquid phase temperature 20. The difference in temperatures 20, 21 between the liquid phase and the vapour phase, in the following referred to as "Delta T", increases during the process, because the amount of water in the oil is reduced. This means that a higher temperature difference Delta T gives cleaner oil, while a lower temperature difference Delta T gives oil with more residual water content. Surprisingly, it has been found that monitoring the temperature difference thus allows determining the residual water content of the oil/water mixture in-situ during treatment in the process chamber, i.e. during the ongoing distillation. In particular when a residual water content drops below about 5%, the temperature difference Delta T gives a good picture of the residual water content.

The following table has been obtained from a series of test batches by stopping the distillation process at the below given value for Delta T, and analysing the residual water content of the discharged waste oil. Table 1 thus gives an indication of the relation between Delta T and the residual water content.

**Table 1**

| Delta T | Residual Water Content |
|---|---|
| 30°C | 0,1 - 0,2 % |
| 27°C | 0,5 - 1 % |
| 25°C | 1 - 3 % |

### After approximately 190 minutes.

The temperature difference Delta T has reached its set point of 30°C (or the "max process time" has reached its set point). All heating elements 12, 13 stop and a vacuum pump time delay of 400 seconds is started in order to cool down. After the vacuum pump delay of 400 seconds has expired, the vacuum pump 15 stops, the venting valve 22 and the waste oil valve 18 open, and the waste oil pump 19 starts and pumps the processed oil to a waste oil tank 7, for a given pumping period of 110 seconds. Afterwards the waste oil valve 18 closes and the system awaits a signal from the floating switch 28 to reload a new batch of oil/water mixture to the process chamber 10.

While conceived with particular regard to the harsh conditions present onboard of a maritime vessel, the scope of the present invention is not limited to use on a marine vessel. At least some of the advantages of the system and method according to the present invention are also relevant and advantageous for other contexts, where an inhomogeneous oil/water sludge comprising both dispersed and continuous phase water is to be dewatered efficiently. For example, the invention may be useful for offshore operations, on oil drilling platforms, or even for non-maritime uses. Such advantages of the system and method according to the invention are, for example, the reliable operation, the energy saving design, or the relatively small physical foot print required for the implementation.

## Claims

1. System (1) for separating oil/water sludge into a clean water component and a dewatered waste oil component in a repetitive batch process, the system (1) comprising
- a vacuum distillation device (2), the vacuum distillation device having a feed port (8) for loading a batch of an oil/water mixture to be treated, a processing chamber (10) provided with heating means (12, 13) in a bottom portion thereof, means for controlling the heating means, a vapour phase port (14) communicating with a top portion of the processing chamber (10), a vacuum pump (15) connected to the vapour phase port (14) and configured for removing water vapour from the processing chamber (10) so as to reduce the vapour phase pressure therein to below atmospheric pressure, and a waste port (17) configured for retrieving dewatered waste oil from a bottom portion of the processing chamber,
the system (1) further comprising
- a control unit (4) configured to perform one or more control functions for controlling the operation of the system (1) in a programmed manner,
**characterised in that** the system (1) further comprises
- a gravitational settling device (3, 203) for pre-treating the sludge prior to loading the distillation device (2), wherein the gravitational settling device (3, 203) has a sludge inlet (30, 230) for receiving sludge in a settling chamber (31, 231), a water outlet (32, 232) for releasing water, and an oil outlet (33, 233) for releasing pre-concentrated oil, wherein the gravitational device (3, 203) is connected to the system (1) via means (34) for transferring water from the water outlet (32, 232) of the gravitational settling device (3, 203) to a clean water tank (6) and means (35) for transferring pre-concentrated oil from the oil outlet (33, 233) of the gravitational settling device (3, 203) to the feed port (8) of the distillation device (2), and
- wherein means (40) are provided for transferring sludge from a sludge tank (5) to the sludge inlet (30, 230) of the gravitational settling device (3).

2. System according to claim 1, wherein the settling chamber (31, 231) of the gravitational settling device (3, 203) has an aspect ratio of a maximum dimension in horizontal directions to a vertical dimension is at least 1:5, or at least 1:10, preferably at least 1:20, more preferably at least 1:25, or even at least 1:30.

3. System according to claim 1 or claim 2, wherein the gravitational settling device (3, 203) has a first chamber (231) and a second chamber (238) separated from the first chamber (231) by a separation wall, wherein the first and second chambers (231, 238) communicate with each other through an opening (239) in a bottom portion of the separation wall.

4. System according to any of the preceding claims, wherein the oil outlet (32, 232) is configured for collecting pre-concentrated oil from a first overflow weir (254, 255) of the first chamber (231) and the water outlet (232) is configured for collecting water from a second overflow weir (256) of the second chamber, wherein the second overflow weir (256) is arranged at a weir height difference h below the first overflow weir (254, 255).

5. System according to any of the claims 3-4, wherein the first chamber (231) is formed as a jacket around the second chamber (238).

6. System according to any of the preceding claims, wherein the sludge inlet (30, 230) is in a vertical direction arranged in a middle portion of the height of the settling chamber (31, 231).

7. System according to any of the preceding claims, wherein the gravitational settling device (3, 203) further comprises a means (58/60, 258/260) for heating the settling chamber (31, 231).

8. System according to any of the preceding claims, wherein the distillation device (2) further comprises a pre-heating chamber (9) arranged between the feed port (8) and the processing chamber (10), so as to pre-heat pre-concentrated oil received through the feed port (8) to a process input temperature prior to loading the processing chamber (10) with the pre-heated and pre-concentrated oil.

9. System according to any of the preceding claims, wherein the heating means (12, 13) of the processing chamber comprise a plurality of heating elements, wherein a first group of heating elements (13) provides a continous basic heat source and a second group of heating elements (12) provides a temperature controlled heat source.

10. System according to any of the preceding claims, further comprising condensing means for condensing vapour retrieved from the process chamber (10) through the vapour port (14).

11. System according to any of the preceding claims, wherein the distillation device (2) further comprises an over-pressure valve (23) for limiting the pressure in the processing chamber and/or a venting valve (22) for use during loading and/or discharging of the process chamber (10).

12. System according to any of the preceding claims, wherein the means for transferring sludge, water, pre-concentrated oil, and/or concentrated waste oil comprise conduits, remotely controllable valves, manual valves, and/or pumps.

13. System according to any of the preceding claims, wherein the means for transferring sludge from the sludge tank (5) to the sludge inlet (30, 230) of the gravitational settling device (3, 203) further comprise a particle filter (41), and/or an automatic air-vent (43).

14. Method for separating an oil/water sludge into a clean water component and a dewatered waste oil component in a repetitive batch process, the method comprising the steps of
- loading a batch of an oil/water mixture as a liquid phase in a processing chamber (10) of a vacuum distillation device (2),
- reducing the pressure in the processing chamber (10) to a processing pressure below atmospheric pressure,
- heating the liquid phase to a liquid phase processing temperature so as to release water from the oil/water mixture of the liquid phase into a vapour phase above the liquid phase and removing vapour from the vapour phase in the processing chamber until the water content of the liquid phase has reached a pre-determined target value, and subsequently
- transferring a residual liquid from the processing chamber (10) to a waste oil tank (7),
**characterised in that** the method further comprises
- pre-treating the sludge in a gravitational settling device (3, 203) so as to remove continuous phase water from the oil/water sludge prior to treatment in the distillation device (2), wherein oil/water sludge is transferred from a sludge tank (5) through a sludge inlet (30, 231) to a middle portion of a settling chamber (31, 231) of the gravitational settling device (3, 203), wherein continous phase water present in the oil/water sludge is accumulated in a bottom portion below the middle portion of the settling chamber, collected from said bottom portion through a water outlet (32, 232), and transferred to a clean water tank (6), and wherein remaining components of the oil/water sludge including dispersed phase water is accumulated as a pre-concentrated oil/water mixture in a top portion above the middle portion of the settling chamber (31, 231), collected from said top portion through an oil outlet (33, 233), and transferred to the vacuum distillation device (2) for further treatment.

15. Method according to claim 14, wherein fulfilment of the criterion that the water content of the oil/water mixture has reached the pre-determined target value is decided by comparing a vapour phase temperature (302) to a liquid phase temperature (301) in the process chamber, wherein the criterion is fulfilled if the liquid phase temperature (301) exceeds the vapour phase temperature (302) by a pre-determined threshold value (303) representative of the predetermined target value for the water content of the residual liquid.
